# EUROPÄISCHE PATENTSCHRIFT

(11) **EP 4 617 811 B1**
(45) Veröffentlichungstag und Bekanntmachung des Hinweises auf die Patenterteilung: **07.10.2026**
(21) Anmeldenummer: 25162110.8
(22) Anmeldetag: 06.03.2025
(51) Int. Cl.: G05D 1/222, G05D 1/695, G05D 1/698

(54) **TRANSPORTIEREN EINER LAST**
TRANSPORTING A LOAD
TRANSPORT D'UNE CHARGE

(30) Priorität: 14.03.2024 DE 102024107257
(43) Veröffentlichungstag der Anmeldung: 17.09.2025
(73) Patentinhaber: HTS Hydraulische Transportsysteme GmbH, 70736 Fellbach (DE)
(72) Erfinder: Gross, Bastian, 70180 Stuttgart (DE); Koch, Michael, 70736 Fellbach (DE); Stiegele, Armin, 70736 Fellbach (DE)
(74) Vertreter: Sattler de Sousa e Brito, Clara

(56) Entgegenhaltungen:
- DE-A1- 10 041 578
- DE-A1- 102019 121 550
- DE-A1- 102022 106 580

## Beschreibung

Die Erfindung betrifft ein Verfahren zum Transportieren einer Last mit einem Transportsystem. Die Erfindung betrifft weiter ein Transportsystem zum Transportieren einer Last. Die Erfindung betrifft weiter ein angetriebenes Transportfahrwerk für ein Transportsystem.

Um eine, insbesondere schwere, Last zu transportieren, kann ein Transportsystem mit Transportfahrwerken vorgesehen sein. Die DE 10 2022 106 580 A1 offenbart beispielsweise ein Transportsystem zum Transportieren einer Last mit einem ersten Transportfahrwerk und mit einem zweiten Transportfahrwerk. Um die Last über einen nichtlinearen Weg zu transportieren, werden meist verschiedene Fahrmanöver nacheinander ausgeführt. Ein erstes Fahrmanöver kann beispielsweise eine Kurvenfahrt sein, an das ein zweites Fahrmanöver, beispielsweise eine Geradeausfahrt oder eine andere Kurvenfahrt, angeschlossen wird. Damit das zweite Fahrmanöver gelingt, müssen die Transportfahrwerke nach dem ersten Fahrmanöver und vor dem zweiten Fahrmanöver ausgerichtet werden. Hierzu werden die Fahrwerke zueinander manuell positioniert. Dieses Vorgehen ist allerdings sehr aufwändig. Liegt die Last auf den Transportfahrwerken auf, so sind die Transportfahrwerke meist visuell verdeckt, so dass meist die Last aufgebockt wird, nur um die Transportfahrwerke zu positionieren. Dieses Vorgehen ist aufwändig.

Es ist daher Aufgabe der Erfindung eine verbesserte Technik zum Transport einer Last bereitzustellen. Diese Aufgabe wird mittels der Gegenstände der unabhängigen Ansprüche gelöst. Abhängige Ansprüche geben bevorzugte Ausführungsformen wieder.

Ein Verfahren zum Transportieren einer Last mit einem Transportsystem umfassend ein erstes angetriebenes Transportfahrwerk, ein zweites angetriebenes Transportfahrwerk und ein Bediengerät, wobei das erste angetriebene Transportfahrwerk und/oder das zweite angetriebene Transportfahrwerk über das Bediengerät bedienbar ist, umfasst die folgenden Verfahrensschritte:
- Transportieren der Last mit dem Transportsystem in einem ersten Fahrmanöver, wobei im ersten Fahrmanöver das zweite Transportfahrwerk dem ersten Transportfahrwerk folgt,
- Beenden des ersten Fahrmanövers und Umschalten auf ein zweites Fahrmanöver,
- Ausrichtung des zweiten Transportfahrwerks, wobei sich das zweite Transportfahrwerk automatisch relativ zum ersten Transportfahrwerk positioniert, und wobei das zweite Transportfahrwerk eine Rückmeldung an das erste Transportfahrwerk und/oder an das Bediengerät zur vollständigen Ausrichtung gibt, nachdem sich das zweite Transportfahrwerk relativ zum ersten Transportfahrwerk vollständig ausgerichtet hat, so dass das zweite Fahrmanöver begonnen werden kann,
- Transportieren der Last mit dem Transportsystem im zweiten Fahrmanöver, wobei im zweiten Fahrmanöver das zweite Transportfahrwerk dem ersten Transportfahrwerk folgt.

Vorzugsweise umfasst das Transportsystem die Last. Insbesondere sind das erste und/oder das zweite Transportfahrwerk, insbesondere und/oder weitere Transportfahrwerke, frei unter der Last positionierbar und/oder stellbar. Insbesondere ist das Transportsystem frei von einem Transportrahmen. Insbesondere ist ein Transportrahmen vorgesehen, um die Last aufzulegen und um fest vorgegebene Aufnahmestellen für die Transportfahrwerke vorzusehen. Bevorzugt umfasst das Transportsystem keinen Transportrahmen.

Unter "folgen" ist beispielsweise zu verstehen, dass das erste und das zweite Transportfahrwerk insbesondere ein Gespann bilden und insbesondere das zweite Transportfahrwerk dem ersten Transportfahrwerk folgt, beispielsweise hinterherfährt. Insbesondere ist das erste Transportfahrwerk ein Master, und das zweite Transportfahrwerk ist ein Slave, und/oder das dritte und/oder weitere Transportfahrwerke sind die Slaves. Hierbei gibt beispielsweise der Master die Fahrtrichtung vor, wobei der Slave oder die Slaves dem Master folgen. Es kann zweckmäßig sein, dass das erste Transportfahrwerk direkt mit dem zweiten Transportfahrwerk kommuniziert. Es kann zweckmäßig sein, dass die Transportfahrwerke über eine Steuereinheit, beispielsweise über ein Bediengerät, kommunizieren.

Unter "Fahrmanöver" ist beispielsweise ein Fahrmodus zu verstehen. Ein Fahrmodus ist beispielsweise eine Hundefahrt, eine Allradlenkungsfahrt, eine Geradeausfahrt, eine Kurvenfahrt, eine Drehung, eine Pivotfahrt, eine Achsschenkellenkungsfahrt, oder dergleichen. Unter "Fahrmanöver" kann auch ein Teil eines Fahrmodus verstanden werden, beispielsweise eine Drehung, die beispielsweise unvollständig ausgeführt wird, und zur Fortsetzung der Drehung, müssen die Fahrwerke ausgerichtet, insbesondere korrigiert, werden, so dass nach der Fortsetzung der Drehung die Drehung vollständig ausgeführt werden kann. Insbesondere kann unter "Fahrmanöver" auch verstanden werden, dass eine Kurvenfahrt mit unterschiedlichen Kurvenradien oder dergleichen durchgeführt wird. Insbesondere kann unter "Fahrmanöver" auch verstanden werden, dass während der Fahrt ein Fehler, insbesondere aufgrund Traktion, beispielsweise durch Fett, wodurch beispielsweise ein Antriebsrad durchdrehen kann, auftritt, wobei zur Fortsetzung der Fahrt die Fahrwerke ausgerichtet, insbesondere korrigiert, werden, wobei sich das zweite Transportfahrwerk automatisch relativ zum ersten Transportfahrwerk positioniert.

Bevorzugt sind bei der Ausrichtung die beiden Transportfahrwerke mindestens teilweise, insbesondere vollständig unter der Last angeordnet. Besonders bevorzugt erfolgt die Ausrichtung unter Last, insbesondere muss die Last nicht angehoben werden. Dadurch ist die Positionierung und Neuausrichtung, beispielsweise bei einem Moduswechsel, vereinfacht und/oder fehlerfrei und/oder mindestens fehlerreduziert, insbesondere bei durch die Last verdeckten Transportfahrwerken, insbesondere ohne visuellen Kontakt. Bevorzugt werden die Transportfahrwerke beim erstmaligen Positionieren visuell positioniert. Bevorzugt erfolgt keine visuelle Kontrolle mehr bei den weiteren Ausrichtungen, insbesondere bei einen Moduswechsel. Bevorzugt wird jedes Transportfahrwerk einzeln ausgerichtet, insbesondere falls die Richtung und/oder die Position eines einzelnen Fahrwerks neu ausgerichtet werden soll.

Durch das automatische Positionieren des zweiten Transportfahrwerks relativ zum ersten Transportfahrwerk ist eine einfache Ausrichtung ermöglicht. Insbesondere muss beim Übergang vom ersten zum zweiten Fahrmanöver die Last nicht angehoben werden. Dadurch ist der Transport der Last vereinfacht. Es kann zweckmäßig sein, dass die Last angehoben wird, insbesondere dann, wenn eines und/oder mehrere der Transportfahrwerke verlaufen. Zweckmäßig ist ein "verlaufen" eine Positions- und/oder Richtungsänderung des Transportfahrwerks derart, dass diese vom Transportfahrwerk allein nicht mehr korrigierbar ist. Vorzugsweise wird vor dem zweiten Fahrmanöver, und insbesondere nach dem ersten Fahrmanöver, das zweite Fahrwerk relativ zum ersten Fahrwerk, insbesondere manuell, ausgerichtet. Vorzugsweise wird nach der, insbesondere manuellen, Ausrichtung eine Geradeausfahrt, insbesondere mit der Last, durchgeführt. Vorzugsweise richtet sich bei nichtparalleler Fahrt der beiden Transportfahrwerke das zweite Transportfahrwerk relativ zum ersten Fahrwerk aus, insbesondere so lange aus, bis beide Transportfahrwerke parallel fahren. Bevorzugt wird nach der Ausrichtung ein Zwischenreset, insbesondere ein Zwischennullen, für den Drehgeber des Transportfahrwerks und/oder für die Drehgeber der Transportfahrwerke durchgeführt. Es kann zweckmäßig sein, dass nach der Ausrichtung der Zwischenreset, insbesondere das Zwischenullen, des Transportsystems, insbesondere eines Bediengeräts des Transportsystems, insbesondere der Transportfahrwerke, durchgeführt wird. Es kann vorteilhaft sein, dass der Zwischenreset, insbesondere das Zwischennullen entfällt.

Erfindungsgemäß gibt das zweite Transportfahrwerk eine Rückmeldung zur vollständigen, insbesondere erfolgreichen, Ausrichtung, nachdem sich das zweite Transportfahrwerk relativ zum ersten Transportfahrwerk vollständig ausgerichtet hat. Dadurch wird bestätigt, dass die Ausrichtung erfolgreich ist, so dass das zweite Fahrmanöver begonnen werden kann. Vorzugsweise gibt das zweite Transportfahrwerk eine Rückmeldung zur unvollständigen Ausrichtung, nachdem sich das zweite Transportfahrwerk relativ zum ersten Transportfahrwerk unvollständig ausgerichtet hat und/oder während sich das zweite Transportfahrwerk relativ zum ersten Transportfahrwerk ausrichtet. Dadurch wird mitgeteilt, dass die Ausrichtung unerfolgreich war und/oder die Ausrichtung derzeit noch durchgeführt wird, insbesondere so dass die Ausrichtung weiter fortgeführt werden sollte und/oder das zweite Fahrmanöver noch nicht begonnen werden sollte. Vorteilhaft erfolgt die Rückmeldung drahtlos, beispielsweise per Funk, beispielsweise mit 2,4 GHz.

Vorteilhaft erfolgt eine Rückmeldung beispielsweise an das erste Transportfahrwerk. Vorteilhaft erfolgt eine Rückmeldung an einen Bediener des Transportsystems. Vorteilhaft erfolgt eine Rückmeldung an ein Bediengerät, wobei vorteilhaft das Bediengerät eine Rückmeldung an einen Bediener gibt. Vorteilhaft ist die Rückmeldung visuell, akustisch, und/oder haptisch. Bei einer visuellen Rückmeldung kann beispielsweise bei vollständiger Ausrichtung eine und/oder zwei Statusanzeigen, insbesondere blau, insbesondere ununterbrochen, aufleuchten. Vorteilhaft kann beispielsweise bei der visuellen Rückmeldung bei unvollständiger Ausrichtung die eine und/oder die zwei Statusanzeigen, insbesondere blau, blinken. Die Statusanzeige meldet insbesondere die Position des zweiten Transportfahrwerks 1' in Bezug auf die Drehposition zurück. Bevorzugt erfolgt pro Transportfahrwerk eine Rückmeldung, insbesondere an das Bediengerät, wobei vorteilhaft das Bediengerät für jedes Transportfahrwerk eine Rückmeldung an den Bediener gibt. Bevorzugt erfolgt für das Master-Transportfahrwerk und für eines oder mehrere der Slave-Transportfahrwerke jeweils eine Rückmeldung, insbesondere an das Bediengerät, wobei vorteilhaft das Bediengerät für das Master-Transportfahrwerk und für eines oder mehrere der Slave-Transportfahrwerke jeweils eine Rückmeldung an den Bediener gibt.

Vorzugsweise wird vor dem ersten Fahrmanöver das zweite Fahrwerk relativ zum ersten Fahrwerk, insbesondere manuell, ausgerichtet. Vorzugsweise wird nach der, insbesondere manuellen, Ausrichtung eine Geradeausfahrt, insbesondere mit der Last, durchgeführt. Vorzugsweise richtet sich bei nichtparalleler Fahrt der beiden Transportfahrwerke das zweite Transportfahrwerk relativ zum ersten Fahrwerk aus, insbesondere so lange aus, bis beide Transportfahrwerke parallel fahren. Bevorzugt wird nach der Ausrichtung ein Reset, insbesondere ein Nullen, für den Drehgeber des Transportfahrwerks und/oder für die Drehgeber der Transportfahrwerke durchgeführt. Es kann zweckmäßig sein, dass nach der Ausrichtung der Reset, insbesondere ein Nullen, des Transportsystems, insbesondere eines Bediengeräts des Transportsystems, insbesondere der Transportfahrwerke, durchgeführt wird.

Vorteilhaft fahren die Transportfahrwerke vor dem ersten Fahrmanöver unter die Last. Vorteilhaft wird der Reset des Transportfahrwerks, und/oder jedes der Transportfahrwerke, und/oder des Transportsystems, insbesondere ein Nullen, durchgeführt. Vorzugsweise wird nach dem Reset eine Geradeausfahrt, insbesondere mit der Last, durchgeführt. Vorzugsweise richtet sich bei nichtparalleler Fahrt der beiden Transportfahrwerke das zweite Transportfahrwerk relativ zum ersten Fahrwerk aus, insbesondere so lange aus, bis beide Transportfahrwerke parallel fahren. Bevorzugt wird nach der Ausrichtung ein erneuter Reset, insbesondere ein erneutes Nullen, für den Drehgeber des Transportfahrwerks und/oder für die Drehgeber der Transportfahrwerke durchgeführt. Es kann zweckmäßig sein, dass nach der Ausrichtung der erneute Reset, insbesondere das erneute Nullen, des Transportsystems, insbesondere eines Bediengeräts des Transportsystems, insbesondere der Transportfahrwerke, durchgeführt wird. Es kann vorteilhaft sein, dass der erneute Reset, insbesondere das erneute Nullen entfällt.

Zweckmäßig umfasst das erste Transportfahrwerk einen Rahmen und einen mit dem Rahmen wirkverbundenen Drehteller. Zweckmäßig ist der Drehteller zur Auflage der zu transportierenden Last vorgesehen. Zweckmäßig ist der Drehteller relativ zum Rahmen drehbar. Zweckmäßig umfasst das erste Transportfahrwerk einen Drehgeber. Zweckmäßig erfasst der Drehgeber den Drehwinkel und/oder die Änderung des Drehwinkels des Drehtellers relativ zum Rahmen. Zweckmäßig umfasst das zweite Transportfahrwerk einen Rahmen und einen mit dem Rahmen wirkverbundenen Drehteller. Zweckmäßig ist der Drehteller zur Auflage der zu transportierenden Last vorgesehen. Zweckmäßig ist der Drehteller relativ zum Rahmen drehbar. Zweckmäßig umfasst das zweite Transportfahrwerk einen Drehgeber. Zweckmäßig erfasst der Drehgeber den Drehwinkel und/oder die Änderung des Drehwinkels des Drehtellers relativ zum Rahmen. Zweckmäßig wird der Drehwinkel des ersten Transportfahrwerks und/oder des zweiten Transportfahrwerks und/oder dass die Änderung des Drehwinkels des ersten Transportfahrwerks und/oder zweiten Transportfahrwerks zur Ausrichtung des zweiten Transportfahrwerks verwendet. Zweckmäßig erfolgt die Ausrichtung des ersten und/oder zweiten Transportfahrwerks, und/oder des Transportsystems ausschließlich unter Verwendung der Drehwinkels und/oder der Änderung des Drehwinkels und/oder lokaler Daten des Transportfahrwerks. Beispielhaft sind lokale Daten des Transportfahrwerks Daten, die direkt und/oder indirekt mit einem Motor des Transportfahrwerks zusammenhängen, wie beispielsweise Drehgeschwindigkeit einer Lastrolle des Transportfahrwerks, Drehwinkel der Lastrolle, Vergleich der Drehgeschwindigkeit und/oder des Drehwinkels mehrerer Lastrollen, und/oder dergleichen. Vorteilhaft werden Daten, insbesondere die lokalen Daten und/oder der Drehwinkel und/oder Änderung der Drehwinkel, zwischen den Transportfahrwerken ausgetauscht.

Zweckmäßig wird über den Drehgeber des ersten Transportfahrwerks und/oder den Drehgeber des zweiten Transportfahrwerks die Position des ersten und/oder zweiten Transportfahrwerks, und insbesondere die Relativposition von ersten zu zweiten Transportfahrwerk, angegeben und/oder gemessen.

Vorteilhaft kommuniziert das erste Transportfahrwerk drahtlos mit dem zweiten Transportfahrwerk und/oder mit den weiteren Transportfahrwerken, beispielsweise über Funk, und/oder über WLAN, und/oder über Mobilfunk, oder dergleichen. Insbesondere kann eine Funkfrequenz beispielsweise etwa 2,4 GHz sein. Vorteilhaft kommunizieren die Transportfahrwerke über einen Zentralrechner, insbesondere Server, oder dergleichen.

Erfindungsgemäß umfasst das Transportsystem ein Bediengerät, insbesondere eine Fernbedienung. Vorzugsweise ist das erste Transportfahrwerk und/oder das zweite Transportfahrwerk über das Bediengerät bedienbar. Vorzugsweise sind beide Transportfahrwerke über das Bediengerät bedienbar.

Zweckmäßig teilt das zweite Transportfahrwerk dem Bediengerät mit, ob sich das zweite Transportfahrwerk relativ zum ersten Transportfahrwerk vollständig ausgerichtet hat, und/oder ob sich das zweite Transportfahrwerk relativ zum ersten Transportfahrwerk unvollständig ausgerichtet hat, und/oder ob sich das zweite Transportfahrwerk relativ zum ersten Transportfahrwerk ausrichtet. Zweckmäßig gibt das Bediengerät die Mitteilung einem Bediener aus.

Vorteilhaft umfasst das Transportsystem ein erstes Bediengerät, insbesondere eine erste Fernbedienung, für das erste Transportfahrwerk und ein zweites Bediengerät, insbesondere eine zweite Fernbedienung, für das zweite Transportfahrwerk. Vorteilhaft kommuniziert das erste Bediengerät mit dem zweiten Bediengerät, insbesondere drahtlos. Vorteilhaft kommuniziert das erste Transportfahrwerk mit dem zweiten Transportfahrwerk, insbesondere erfolgt eine direkte Kommunikation zwischen erstem und zweiten Transportfahrwerk. Vorteilhaft kommuniziert ein erstes Steuerungssystem des ersten Transportfahrwerks, mit einem zweiten Steuerungssystem des zweiten Transportfahrwerks, insbesondere erfolgt eine direkte Kommunikation zwischen erstem und zweitem Steuerungssystem. Vorteilhaft kommuniziert eine erste Kommunikationseinheit des ersten Transportfahrwerks, mit einer zweiten Kommunikationseinheit des zweiten Transportfahrwerks, insbesondere erfolgt eine direkte Kommunikation zwischen erster und zweiter Kommunikationseinheit.

Vorzugsweise sendet das Bediengerät einen Befehl zur Ausrichtung des zweiten Transportfahrwerks an das zweite Transportfahrwerk. Insbesondere erhält das Bediengerät, beispielsweise durch einen Druck auf eine Bedientaste oder durch eine Auslenkung eines Joysticks, eine Eingabe zur Ausrichtung. Vorzugsweise sendet das Bediengerät den Befehl zur Ausrichtung des zweiten Transportfahrwerks solange an das zweite Transportfahrwerk, bis das zweite Transportfahrwerk ausgerichtet ist. Es kann zweckmäßig sein, dass die Bedientaste solange gedrückt wird oder dass der Joystick solange ausgelenkt wird, bis die Ausrichtung abgeschlossen ist. Insbesondere bei Loslassen der Bedientaste oder des Joysticks vor der vollständigen Ausrichtung, kann beispielsweise eine Mitteilung erfolgen, insbesondere die Statusanzeige blinken.

Zweckmäßig umfasst das Transportsystem ein drittes angetriebenes Transportfahrwerk, wobei zweckmäßig die folgenden Verfahrensschritte ausgeführt werden können:
- Transportieren der Last mit dem Transportsystem in einem ersten Fahrmanöver, wobei im ersten Fahrmanöver das zweite Transportfahrwerk und das dritte Transportfahrwerk dem ersten Transportfahrwerk folgen,
- Beenden des ersten Fahrmanövers und Umschalten auf ein zweites Fahrmanöver,
- Ausrichtung des zweiten Transportfahrwerks und des dritten Transportfahrwerks, wobei sich das zweite Transportfahrwerk und das dritte Transportfahrwerk automatisch relativ zum ersten Transportfahrwerk positionieren,
- Transportieren der Last mit dem Transportsystem im zweiten Fahrmanöver, wobei im zweiten Fahrmanöver das zweite Transportfahrwerk und das dritte Transportfahrwerk dem ersten Transportfahrwerk folgen.

Vorteilhaft sind die Transportfahrwerke baugleich. Vorteilhaft sind die Transportfahrwerke gleich hoch, insbesondere weisen eine gleiche Bauhöhe auf. Vorteilhaft ist der Abstand der Last zum Boden bei den Transportfahrwerken gleich. Es kann zweckmäßig sein, dass die Transportfahrwerke unterschiedlich aufgebaut sind. Es kann zweckmäßig sein, dass die Transportfahrwerke unterschiedlich hoch sind. Zweckmäßig werden Transportfahrwerke kombiniert, die unterschiedliche Traglasten aufweisen.

Vorteilhaft ist das Transportfahrwerk, insbesondere jedes der Transportfahrwerke, unter der Last frei positionierbar. Dadurch muss das Transportfahrwerk und/oder die Transportfahrwerke keine vordefinierte Position unter der Last einnehmen. Insbesondere kann dadurch eine beliebige Last transportiert werden.

Ein Transportsystem zum Transportieren einer Last ist dazu eingerichtet, ein hierin beschriebenes Verfahren durchzuführen.

Ein angetriebenes Transportfahrwerk ist für ein hierein beschriebenes Transportsystem vorgesehen. Ein angetriebenes Transportfahrwerk ist für die Durchführung eines hierin beschriebenen Verfahrens vorgesehen ist. Vorzugsweise umfasst das angetriebene Transportfahrwerk einen Drehgeber.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Vorteilhafte Ausführungsbeispiele der Erfindung werden nachfolgend anhand der beiliegenden Figuren beschrieben. Es zeigen
- Fig. 1: eine perspektivische Obenansicht eines angetriebenen Transportfahrwerks,
- Fig. 2: eine perspektivische Untenansicht eines Details, insbesondere eines Drehgebers, des angetriebenen Transportfahrwerks,
- Fig. 3: eine schematische Darstellung eines Transportsystems in einem Geradeausfahrmodus und/oder Kalibriermodus,
- Fig. 4: eine schematische Darstellung eines Transportsystems in einem Allradmodus in einer 30°-Kurvenfahrt,
- Fig. 5: eine schematische Darstellung eines Transportsystems in einem Allradmodus in einer 90°-Kurvenfahrt,
- Fig. 6: eine schematische Darstellung eines Transportsystems in einem Pivotmodus,
- Fig. 7: eine schematische Darstellung eines Transportsystems in einem Hundemodus,
- Fig. 8: eine schematische Darstellung eines Transportsystems in einem Achsschenkellenkungsmodus, und
- Fig. 9: eine schematische Darstellung eines Bediengeräts.

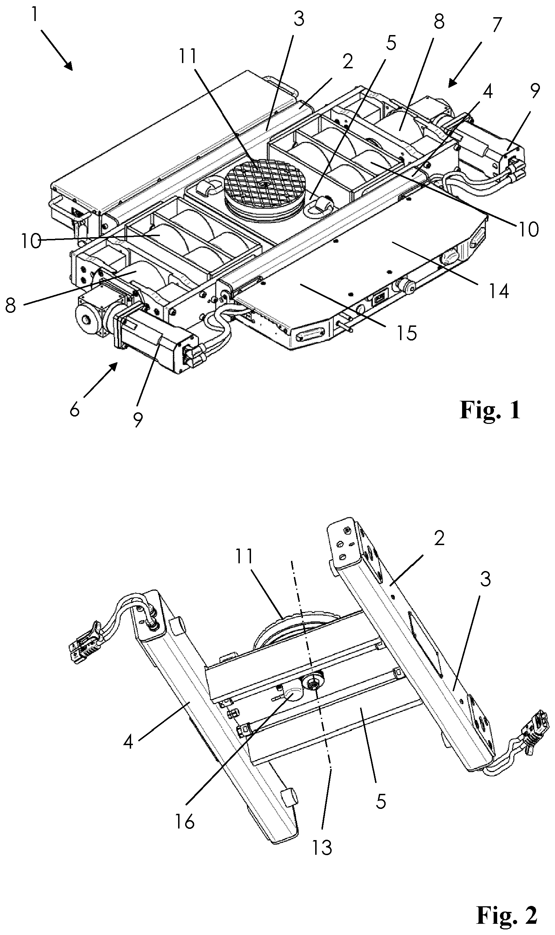

In einem ersten Ausführungsbeispiel zeigt die Fig. 1 ein angetriebenes Transportfahrwerk 1. Das angetriebene Transportfahrwerk 1 umfasst einen Rahmen 2. Im Ausführungsbeispiel ist der Rahmen 2 in Form eines "H" ausgebildet. Der Rahmen 2 umfasst zwei Längsträger 3, 4 und einen die Längsträger verbindenden Querträger 5. Am Rahmen 2 sind im Ausführungsbeispiel zwei Antriebseinheiten 6, 7, insbesondere pendelnd, befestigt. Im Ausführungsbeispiel sind die beiden Antriebseinheiten 6, 7 weitgehend baugleich ausgebildet, insbesondere sind die beiden Antriebseinheiten 6, 7 symmetrisch ausgebildet. In einem weiteren Ausführungsbeispiel kann vorgesehen sein, dass das angetriebene Transportfahrwerk 1 nur eine Antriebseinheit 6, 7 umfasst.

Im Nachfolgenden soll eine der beiden Antriebseinheiten 6, 7 näher beschrieben werden, wobei die Beschreibung auf beide Antriebseinheiten 6, 7 zutrifft. Im Anspruchssatz wird hierbei differenziert durch "Antriebseinheit" und "weitere Antriebseinheit". Im Folgenden soll zur einfacheren Lesbarkeit das Wort "weitere" entfallen, wobei auch bei Entfallen des Wortes "weitere" die nachfolgende Beschreibung auf beide Antriebsrollen 6, 7 zutrifft. Selbiges gilt für die Bezugszeichen.

Die Antriebseinheit 6, 7 umfasst eine Antriebsrolle 8. Die Antriebsrolle 8 ist zur Kraftübertragung auf einen Boden, auf welchem das angetriebene Transportfahrwerk 1 verfahren kann, vorgesehen. Die Antriebseinheit 6, 7 umfasst einen Motor, im Ausführungsbeispiel einen Elektromotor 9, bevorzugt einen Synchronmotor, insbesondere einen Dreiphasen-Synchronmotor. Die Kraft des Elektromotors 9 wird über die Antriebsrolle 8 auf den Boden übertragen.

Die Antriebseinheit 6, 7 umfasst mindestens eine, im Ausführungsbeispiel vier Lastrollen 10. Die Lastrollen 10 sind nicht angetrieben. Die Lastrollen 10 überragen einen Großteil, der Last auf den Boden.

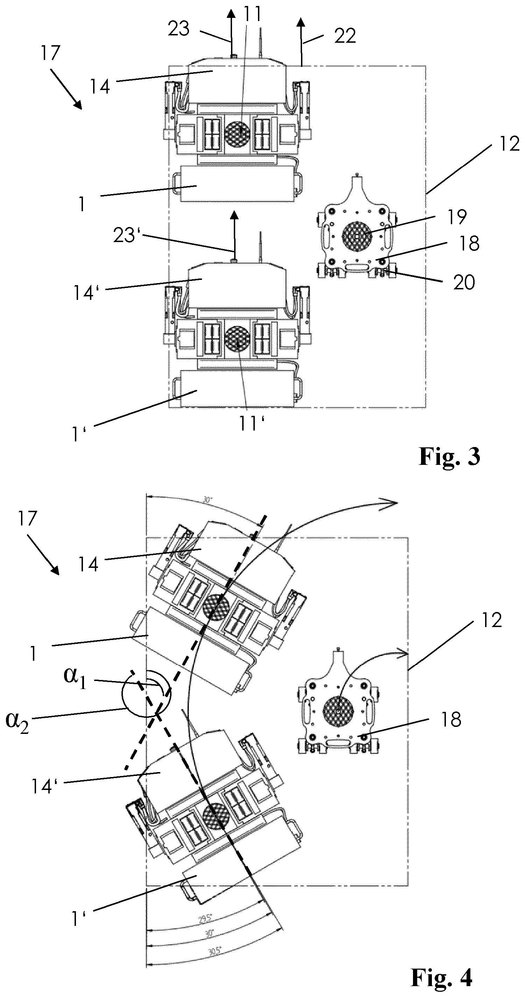

Das angetriebene Transportfahrwerk 1 umfasst einen in den Fig. 1 und 2 dargestellten Drehteller 11. Der Drehteller 11 ist als Auflagepunkt für eine beispielhaft in Fig. 3 gezeigte Last 12 vorgesehen. Wie gut in den Fig. 1 und 2 zu sehen ist, ist der Drehteller 11 am Rahmen 2 befestigt, insbesondere drehbar befestigt. Der Drehteller 11 ist mittig am Rahmen 2 befestigt. Im Ausführungsbeispiel ist der Rahmen 2 als "H"-förmiger Rahmen ausgebildet, wobei der Drehteller 11 im Zentrum, insbesondere im geometrischen Zentrum, und/oder insbesondere im Schwerpunkt, und/oder insbesondere im Symmetriemittelpunkt, des "H"-Rahmens angeordnet ist. Im Ausführungsbeispiel ist der Drehteller 11 am Querträger 5 des Rahmens 2 befestigt. Der Drehteller 11 ist um eine Drehachse 13 drehbar am Rahmen 2 gelagert. In einer weiteren Ausgestaltung kann mit dem Rahmen 2 ein in den Figuren nicht gezeigter Hubzylinder wirkverbunden, insbesondere am Rahmen 2 befestigt, sein. Zweckmäßig kann mit dem Hubzylinder die Last 12 angehoben werden, wobei vorteilhaft sich bei angehobener Last das Transportfahrwerk 1 ausrichten kann. Vorteilhaft wird die Last 12 mit dem Hubzylinder angehoben, wobei anschließend die Last 12 auf einer Stütze gelegt wird. Vorteilhaft kann dadurch das Transportfahrwerk 1 unter der Last verfahren und gegebenenfalls eine neue Position einnehmen. Vorzugsweise wird die Last 12 mit einer Dreipunktauflage, insbesondere mit einer Vierpunktauflage, transportiert. Vorteilhaft wird die Last 12 in einer Taktfertigung transportiert. Dadurch, insbesondere aufgrund des Hubzylinders, insbesondere durch einen integrierten Hub, wird beispielsweise eine Möglichkeit geschaffen, ein Transportsystem und/oder Transportfahrwerke mit Vierpunktauflage flexibel in einer Taktfertigung zu verwenden. Es kann zweckmäßig sein, insbesondere mit dem wirkverbundenen Hubzylinder, dass der Rahmen 2 unsymmetrisch ausgebildet ist. Insbesondere kann der Rahmen 2 an einer Seite ein breiteres Rohr als an der anderen Seite umfassen. Zweckmäßig kann hierzu Bauraum vorgesehen sein, insbesondere Bauraum für den Hubzylinder, für eine in den Figuren nicht gezeigte Pumpe für den Hubzylinder, und/oder für einen in den Figuren nicht gezeigten Tank für den Hubzylinder.

Das angetriebene Transportfahrwerk 1 umfasst ein in Fig. 1 gezeigtes Steuerungssystem 14. Das Steuerungssystem 14 ist am Rahmen 2, im Ausführungsbeispiel beispielhaft an einem der Längsträger 4 des Rahmens 2, befestigt. Das Steuerungssystem 14 dient zum Steuern des angetriebenen Transportfahrwerks 1. Das angetriebene Transportfahrwerk 1 umfasst eine Kommunikationseinheit 15. Die Kommunikationseinheit 15 ist mit dem Steuerungssystem 14 verbunden. Die Kommunikationseinheit 15 kann Befehle empfangen und/oder Befehle senden und/oder Mitteilungen empfangen und/oder senden.

Das angetriebene Transportfahrwerk 1 umfasst einen in Fig. 2 gezeigten Drehgeber 16. Der Drehgeber 16 ist als Winkellagegeber bzw. Winkelsensor ausgebildet. Der Drehgeber 16 erfasst den Drehwinkel und/oder die Änderung des Drehwinkels des Drehtellers 11 relativ zum Rahmen 2. Die erfassten Daten, insbesondere der Drehwinkel bzw. die Änderung des Drehwinkels werden an das Steuerungssystem 14 gesandt und dort gegebenenfalls weiterverarbeitet. Die erfassten Daten, insbesondere der Drehwinkel bzw. die Änderung des Drehwinkels werden optional an die Kommunikationseinheit 15 gesandt und dort gegebenenfalls weiterverarbeitet. Beispielsweise weiterversandt. Der Drehgeber 16 ist im Ausführungsbeispiel unten, also unterseitig, also dem im Betriebszustand der dem Boden zugewandten Seite des Rahmen 2, am Rahmen 2 befestigt. Der Drehgeber 16 ist am Querträger 5 des Rahmens 2 befestigt. Der Drehgeber 16 steht in Wirkverbindung mit dem Drehteller 11. In einem weiteren Ausführungsbeispiel kann der Drehgebar 16 auch oben angeordnet sein. In einem weiteren Ausführungsbeispiel kann der Drehgeber 16 auch mit einem integrierten Hub eingebaut sein.

Im Nachfolgenden soll anhand der Fig. 4 bis 9 erläutert werden, wie die Last 12 transportiert werden kann.

Hierzu ist ein Transportsystem 17 vorgesehen. Das Transportsystem 17 umfasst im Ausführungsbeispiel ein erstes angetriebenes Transportfahrwerk 1 und ein zweites angetriebenes Transportfahrwerk 1'. In einem weiteren Ausführungsbeispiel kann das Transportsystem 17 auch mehr als zwei angetriebene Transportfahrwerke 1, 1',beispielsweise drei angetriebene Transportfahrwerke, vier angetriebene Transportfahrwerke, sechs angetriebene Transportfahrwerke, acht angetriebene Transportfahrwerke, und dergleichen. Im nachfolgend beschriebenen Ausführungsbeispiel soll das Transportsystem 17 zwei angetriebene Transportfahrwerke 1, 1' umfassen. Insbesondere eine Übertragbarkeit auf mehrere Transportfahrwerke 1, 1' soll gegeben sein. Im Ausführungsbeispiel sind die beiden angetriebenen Transportfahrwerke 1, 1' baugleich ausgebildet. Bezugszeichen mit und ohne "'" entsprechen hierbei gleichen Bauteilen, wobei sich die Unterscheidung durch das angetriebene Transportfahrwerk 1, 1' ergibt. Das Transportsystem 17 umfasst ein, insbesondere antriebsloses Rotationsfahrwerk 18. Das Rotationsfahrwerk 18 umfasst einen Auflagepunkt, beispielsweise in Form eines Auflagetellers 19, insbesondere in Form eines Gummibalgs, für die Last 12. Das Rotationsfahrwerk 18 umfasst Lastrollen 20.

Die zu transportierende Last 12 liegt auf den Drehtellern 11, 11' der beiden angetriebenen Transportfahrwerke 1, 1' sowie optional auf dem Auflagepunkt, beispielsweise in Form des Auflagetellers 19, des optionalen Rotationsfahrwerks 18 auf. In einem weiteren Ausführungsbeispiel liegt die zu transportierende Last 12 auf den Drehtellern 11, 11' von mindestens drei Transportfahrwerken 1, 1' auf.

Das Transportsystem 17 umfasst das Steuerungssystem 14 zum Steuern des ersten angetriebenen Transportfahrwerks 1. Das Transportsystem 17 umfasst das Steuerungssystem 14' zum Steuern des zweiten angetriebenen Transportfahrwerks 1'. Das erste angetrieben Transportfahrwerk 1 folgt zunächst und im Wesentlichen der von einem Benutzer vorgegebenen Fahrtrichtung und/oder Fahrmanöver. Hierbei setzt das Steuerungssystem 14 die Fahrbefehle des Benutzers und/oder das vom Benutzer gewünschte Fahrmanöver um, indem das Steuerungssystem 14 das erste angetriebene Transportfahrwerk 1 steuert. Das zweite Steuerungssystem 14' steuert das zweite angetriebene Transportfahrwerk 1' so, dass es dem ersten angetriebenen Transportfahrwerk 1 folgt. Somit folgen beide angetriebenen Transportfahrwerke 1, 1' der vom Benutzer vorgegebenen Fahrtrichtung und/oder führen das Fahrmanöver aus.

Das zweite Steuerungssystem 14' steuert das zweite angetriebene Transportfahrwerk 1' in Abhängigkeit des ersten Drehwinkels oder der ersten Änderung des ersten Drehwinkels des ersten angetriebenen Transportfahrwerks 1 und in Abhängigkeit des zweiten Drehwinkels oder der zweiten Änderung des zweiten Drehwinkels des zweiten angetriebenen Transportfahrwerks 1'. Insbesondere werden die Daten zum Drehwinkel und/oder zur Änderung des Drehwinkels, insbesondere beider Transportfahrwerke 1, 1', zur Durchführung des Fahrmanövers verwendet. In einem weiteren Ausführungsbeispiel wird das zweite angetriebene Transportfahrwerk 1' direkt über den Funk erhaltene Steuerungsdaten gesteuert, wobei insbesondere das zweite Steuerungssystem 14' vorgesehen ist, um das zweite angetriebene Transportfahrwerk 1' auszurichten und/oder zu korrigieren und/oder automatisch zu positionieren.

Im Ausführungsbeispiel nutzt das Transportsystem 17 zur Gesamtsteuerung des Transportsystems das Steuerungssystem 14 des ersten Transportfahrwerks 1 bzw. das Steuerungssystem 14' des zweiten Transportfahrwerks 1'. In einem weiteren Ausführungsbeispiel kann das Steuerungssystem 14, 14' außerhalb der Transportfahrwerke 1, 1' vorgesehen sein. In einem weiteren Ausführungsbeispiel kann auch nur ein Steuerungssystem 14, 14' vorgesehen sein.

In einem weiteren Ausführungsbeispiel kann vorgesehen sein, dass das Steuerungssystem 14, 4' neben dem Drehwinkel und/oder den Drehwinkeln mit weiteren Eingangsgrößen zum Steuern des angetriebenen Transportfahrwerks 1, 1' und/oder der angetriebenen Transportfahrwerke 1, 1' nutzt. Unter den weiteren Eingangsgrößen kann beispielsweise ein Positionsdatum und/oder Positionsdaten verstanden werden, die insbesondere aus GPS-Daten stammen können. Unter Eingangsgrößen können auch Geometriedaten des Transportfahrwerks und/oder der Transportfahrwerke und/oder Geometriedaten der Umgebung und/oder Geometriedaten der Last verstanden werden. Solche Geometriedaten sind beispielsweise die räumlichen Abmessungen, oder dergleichen.

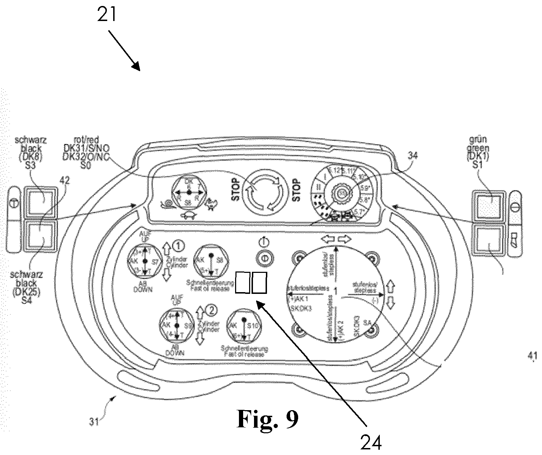

Über ein in den Fig. 9 dargestelltes Bediengerät 21 ist das Steuerungssystem 14, 14' der ersten Antriebseinheit 6, 7 bzw. der ersten Antriebseinheiten 6, 7 bzw. der zweiten Antriebseinheit 6', 7' bzw. der zweiten Antriebseinheiten 6', 7' ansteuerbar. Im Ausführungsbeispiel ist das Bediengerät 21 in Form einer Fernbedienung ausgebildet. In einem weiteren Ausführungsbeispiel kann das Bediensystem 21 kabelgebunden sein.

Im Nachfolgenden soll anhand der Fig. 3 bis 8 erläutert werden, wie ein Transport der Last 12 mit dem Transportsystem 17 erfolgt.

Hierbei zeigt Fig. 3 einen Kalibriermodus bzw. einen Geradeausfahrmodus. Zunächst wird die Last 12 auf den beiden angetriebenen Transportfahrwerke 1, 1' sowie optional auf dem Rotationsfahrwerk 18 aufgelegt. Dadurch kann die Last 12 in der Ebene in allen Richtungen bewegt werden. Zweckmäßig ist das Rotationsfahrwerk 18 versetzt zur Mitte der angetriebenen Transportfahrwerke 1, 1' angeordnet.

Die beiden angetriebenen Transportfahrwerke 1, 1' werden parallel zu einer Fahrtrichtung 22 der Last 12, insbesondere manuell, ausgerichtet. Dies bedeutet, wie gut in Fig. 3 zu sehen ist, dass die Geradeausfahrtrichtungen 23, 23' der beiden angetriebenen Transportfahrwerke 1, 1' etwa parallel zueinander sind. Zudem sind die Geradeausfahrtrichtungen der beiden angetriebenen Transportfahrwerke 1, 1' etwa parallel zur gewünschten Geradeausfahrtrichtung 22 der Last 12.

Nach der, insbesondere manuellen, Ausrichtung wird eine Geradeausfahrt, insbesondere mit der Last 12, durchgeführt. Sollten die beiden Transportfahrwerke 1, 1' nichtparallel fahren, wird das zweite Transportfahrwerk 1' relativ zum ersten Transportfahrwerk 1 ausgerichtet. Vorteilhaft erfolgt die Ausrichtung automatisch. Insbesondere wird das zweite Transportfahrwerk 1' so lange ausgerichtet, bis beide Transportfahrwerke 1, 1' parallel fahren. Nach der Ausrichtung werden die Drehgeber 16, 16' kalibriert, insbesondere genullt. Das Transportsystem 17 ist nun ansteuerbar und/oder bereit für Fahrmanöver.

Besonders bevorzugt gibt das zweite Transportfahrwerk 1' eine Rückmeldung zur vollständigen Ausrichtung, nachdem sich das zweite Transportfahrwerk 1' relativ zum ersten Transportfahrwerk 1 vollständig ausgerichtet hat, insbesondere nach der Ausrichtung des zweiten Transportfahrwerks 1'. Weiter besonders bevorzugt gibt das zweite Transportfahrwerk 1' eine Rückmeldung zur unvollständigen Ausrichtung, nachdem sich das zweite Transportfahrwerk 1' relativ zum ersten Transportfahrwerk 1 unvollständig ausgerichtet hat und/oder während sich das zweite Transportfahrwerk 1' relativ zum ersten Transportfahrwerk 1 ausrichtet. Eine solche Rückmeldung kann drahtlos, beispielsweise per Funk, erfolgen. Die Rückmeldung kann an das erste Transportfahrwerk 1, an den Bediener, und/oder an das in Fig. 9 gezeigte Bediengerät 21 erfolgen. Am Bediengerät 21 kann vorteilhaft eine Statusanzeige 24 umfassen. Die Statusanzeige 24 kann beispielsweise zwei, insbesondere blaue, LEDs umfassen. Bei vollständiger Ausrichtung können beispielsweise die eine und/oder zwei Statusanzeigen 24, insbesondere blau, insbesondere ununterbrochen, aufleuchten. Vorteilhaft kann beispielsweise bei der visuellen Rückmeldung bei unvollständiger Ausrichtung die eine und/oder die zwei Statusanzeigen 24, insbesondere blau, blinken.

Die Steuerung des Transportsystems 17, insbesondere der beiden angetriebenen Transportfahrwerke 1, 1' erfolgt bevorzugt über das Bediengerät 21. Der Bediener gibt über das Bediengerät 21 beispielsweise vor, dass sich das zweite Transportfahrwerk 1' relativ zum ersten Transportfahrwerk 1 ausrichten soll. Der Bediener kann hierzu eine Taste und/oder Bedienelement am Bediengerät 21 bedienen. Bevorzugt muss der Bediener die Taste und/oder das Bedienelement so lange drücken, bis das zweite Transportfahrwerk 1' vollständig ausgerichtet ist. Der Bediener erhält über die Statusanzeige 24 die Nachricht, sobald das zweite Transportfahrwerk 1' vollständig ausgerichtet ist, und/oder ob es sich gerade ausrichtet und/oder ob es unvollständig ausgerichtet ist.

Der Bediener gibt über das Bediengerät 21 beispielsweise die gewünschte Fahrtrichtung und/oder den gewünschten Fahrmodus und/oder das gewünschte Fahrmanöver vor. Sodann werden die gewünschten Signale an die Steuerungssysteme 14, 14' gesandt. Die Steuerung des ersten angetriebenen Transportfahrwerks 1 erfolgt mit dem ersten Steuerungssystem 14. Die Steuerung des zweiten angetriebenen Transportfahrwerks 1' erfolgt mit dem zweiten Steuerungssystem 14', bevorzugt in Abhängigkeit des ersten Drehwinkels oder der ersten Änderung des ersten Drehwinkels des ersten angetriebenen Transportsystems 1 und in Abhängigkeit des zweiten Drehwinkels oder der zweiten Änderung des zweiten Drehwinkels des zweiten angetriebenen Transportsystems. Der Benutzer muss hierbei lediglich eine Fahrtrichtung und/oder ein Fahrmanöver und/oder einen Fahrmodus am Bediengerät 21 vorgeben. Die Steuerungssysteme 14, 14' berechnen dann in Abhängigkeit der Drehwinkel die einzelnen Fahrtrichtungen der einzelnen angetriebenen Transportfahrwerke 1, 1' derart, dass die Fahrtrichtung der Last 12 der gewünschten Fahrtrichtung des Bedieners entspricht.

Insbesondere durch die Verwendung von Dreiphasen-Synchronmotoren 9 und dazugehörigen Reglern, ist die Soll- und Istdrehzahl nahezu gleich. Dadurch wird, insbesondere in Kombination mit den Drehgebern 16, 16' ermöglicht, dass die zwei oder mehrere angetriebene Transportsysteme 1, 1' über ein Bediengerät 21 steuerbar sind und insbesondere synchron fahrbar sind.

Besonders für den Bediener ist die Ausrichtung des zweiten Transportfahrwerks 1', wobei sich das zweite Transportfahrwerk 1' automatisch relativ zum ersten Transportfahrwerk 1 positioniert. So kann beispielsweise die Last mit dem Transportsystem 17 in einem ersten Fahrmanöver transportiert werden, wobei im ersten Fahrmanöver das zweite Transportfahrwerk 1' dem ersten Transportfahrwerk 1 folgt. Nach Beenden des ersten Fahrmanövers, beispielsweise aufgrund des vollständig erbrachten ersten Fahrmanövers oder durch einen Befehl des Bedieners, erfolgt ein Umschalten auf ein zweites Fahrmanöver. Vor Beginn des zweiten Fahrmanövers erfolgt die Ausrichtung des zweiten Transportfahrwerks 1', wobei sich das zweite Transportfahrwerk 1' automatisch relativ zum ersten Transportfahrwerk 1 positioniert. Ein manuelles Eingreifen des Bedieners ist nicht erforderlich. Nach der Ausrichtung wird die Last mit dem Transportsystem 17 im zweiten Fahrmanöver transportiert, wobei im zweiten Fahrmanöver das zweite Transportfahrwerk 1' dem ersten Transportfahrwerk 1 folgt.

Nachfolgend sollen weitere Fahrmanöver und/oder Fahrmodi, neben der in Fig. 3 gezeigten Geradeausfahrt, erläutert werden. Die Fahrmanöver und/oder Fahrmodi können beliebig aneinander gereiht werden, wobei bevorzugt zwischen zwei Fahrmanövern und/oder Fahrmodi das zweite Transportfahrwerk 1' relativ zum ersten Transportfahrwerk 1 ausgerichtet wird.

Fig. 3 zeigt neben des Kalibriermodus, bei welchem die beiden angetriebenen Transportfahrwerke 1, 1 ' stehen, den Geradeausfahrmodus, bei welchem die beiden angetriebenen Transportfahrwerke 1, 1' geradeaus fahren.

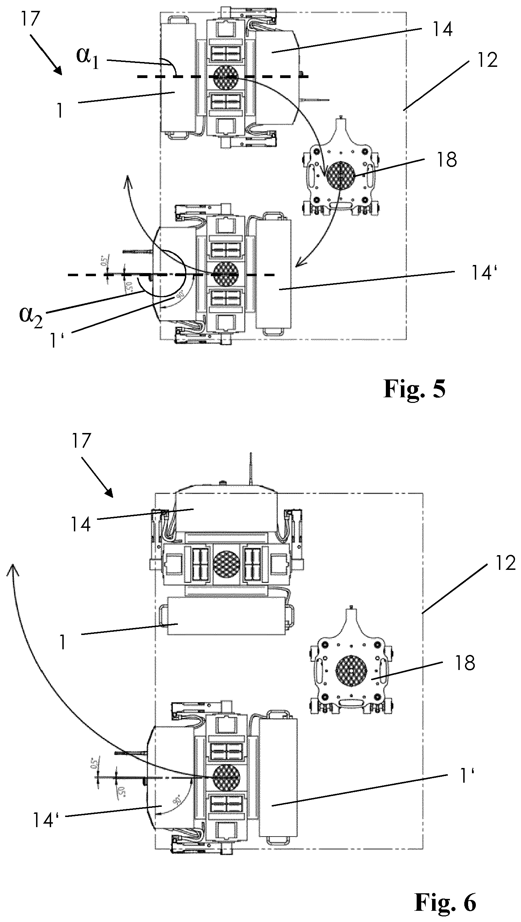

Fig. 4 und 5 zeigen einen Allradmodus, also insbesondere eine Kurvenfahrt. Hierbei müssen beim Verfahren die beiden angetriebenen Transportfahrwerke 1, 1' insbesondere genau spiegelbildlich zur Horizontalen lenken und insbesondere ihre Lage relativ zur Last halten. Durch die beiden Drehgeber 16, 16' ist die Winkellage der beiden angetriebenen Transportfahrwerke 1, 1' relativ zur Last 12 bekannt. Die Steuerungssysteme 14, 14' steuern in einem Allradmodus, insbesondere bei Kurvenfahrt, das erste und das zweite angetriebene Transportfahrwerk 1, 1' derart, dass der erste Drehwinkel α1 des ersten angetriebenen Transportfahrwerks 1 und der zweite Drehwinkel α2 des zweiten angetriebenen Transportfahrwerks 1' so eingestellt werden, dass der zweite Drehwinkel α2 etwa 360°, insbesondere mit einer Toleranz von etwa +/- 1,5°, abzüglich des ersten Drehwinkels α1 beträgt, und insbesondere dass das zweite Transportfahrwerk 1' der Spur des ersten Transportfahrwerks 1 folgt.

In einem weiteren Ausführungsbeispiel steuert das Steuerungssystem 14' des zweiten angetriebenen Transportfahrwerks 1' in einem Allradmodus, insbesondere bei Kurvenfahrt, das zweite angetriebene Transportfahrwerk 1' derart, dass der zweite Drehwinkel α2 etwa 360°, insbesondere mit einer Toleranz von etwa +/- 1,5°, abzüglich des ersten Drehwinkels α1 beträgt, und insbesondere dass das zweite Transportfahrwerk 1' der Spur des ersten Transportfahrwerks (1) folgt.

In Fig. 4 ist ein erster Drehwinkel α1 von etwa 30° und ein zweiter Drehwinkel α2 von etwa 330° gezeigt, in Fig. 5 ist hierbei ein erster Drehwinkel α1 von etwa 90° und ein zweiter Drehwinkel α2 von etwa 270° gezeigt. Das antriebslose Rotationsfahrwerk 18 folgt den Bewegungen der beiden angetriebenen Transportfahrwerke 1, 1'.

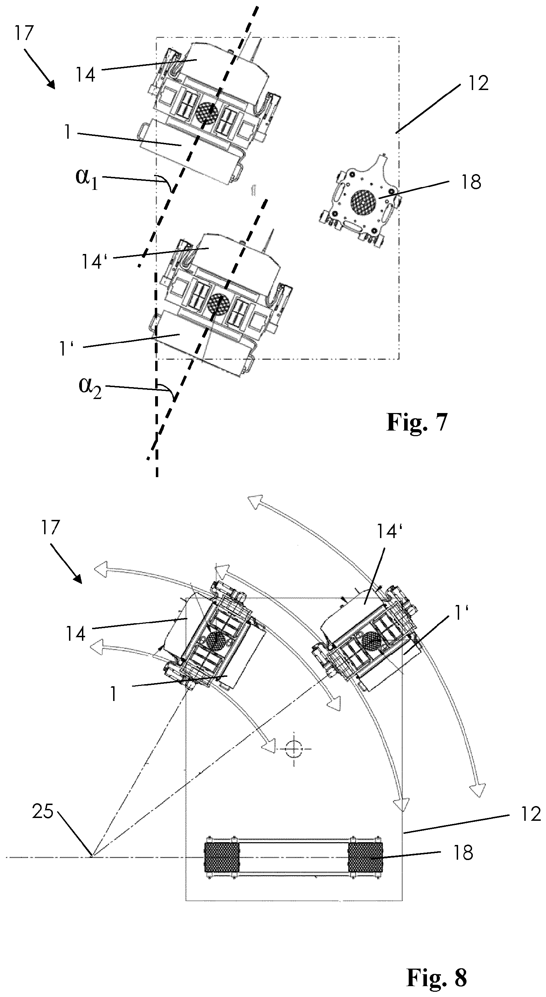

Fig. 6 zeigt einen Pivotmodus, also insbesondere eine Drehfahrt. Die Steuerungssysteme 14, 14' steuern das erste und das zweite angetriebene Transportfahrwerk 1, 1' derart, dass das erste angetriebene Transportfahrwerk 1 steht und sich das zweite angetriebene Transportfahrwerk 1' bewegt. Die Last 12 wird hierbei um die erste Drehachse 13 des ersten Drehtellers 11 gedreht wird, indem das zweite angetriebene Transportfahrwerk 1' relativ zum ersten angetriebenen Transportfahrwerk 1 so ausgerichtet wird, dass der Betrag der Differenz des zweiten Drehwinkels zum ersten Drehwinkel etwa 90°, insbesondere mit einer Toleranz von etwa +/- 1,5°, beträgt. Vorteilhaft kann der in Fig. 7 gezeigte Pivotmodus auch so durchgeführt werden, dass das zweite angetriebene Transportfahrwerk 1' steht und sich das erste angetriebene Transportfahrwerk 1 bewegt. Die Last 12 wird hierbei um die zweite Drehachse 13' des zweiten Drehtellers 11' gedreht, indem das erste angetriebene Transportfahrwerk 1 relativ zum zweiten angetriebenen Transportfahrwerk 1' so ausgerichtet wird, dass der Betrag der Differenz des ersten Drehwinkels zum zweiten Drehwinkel etwa 90°, insbesondere mit einer Toleranz von etwa +/- 1,5°, beträgt.

In einem weiteren Ausführungsbeispiels steuert das Steuerungssystem 14' des zweiten angetriebenen Transportfahrwerks 1' in einem Pivotmodus, insbesondere bei einer Drehfahrt, das zweite angetriebene Transportfahrwerk 1' derart, dass sich das zweite selbstfahrende Transportfahrwerk 1' bewegt, wobei das erste selbstfahrende Transportfahrwerk 1 steht, und dass die Last 12 um die erste Drehachse 13 des ersten Drehtellers 11 gedreht wird, indem das zweite angetriebene Transportfahrwerk 1' relativ zum ersten angetriebenen Transportfahrwerk 1 so ausgerichtet wird, dass der Betrag der Differenz des zweiten Drehwinkels zum ersten Drehwinkel etwa 90°, insbesondere mit einer Toleranz von etwa +/- 1,5°, beträgt.

Fig. 7 zeigt einen Hundemodus, also insbesondere eine Schrägfahrt. Die Steuerungssysteme 14, 14' steuern das erste und das zweite angetriebene Transportfahrwerk 1, 1' derart, dass der erste Drehwinkel α1 des ersten angetriebenen Transportfahrwerks 1 und der zweite Drehwinkel α2 des zweiten angetriebenen Transportfahrwerks 1' so eingestellt werden, dass diese etwa gleich groß sind, insbesondere mit einer Toleranz von etwa +/- 1,5°, und insbesondere dass die Spur des zweiten Transportfahrwerk 1' parallel zur Spur des ersten Transportfahrwerks 1 verläuft. Die Last 12 kann hierbei "quer" verfahren werden, also in einer translatorischen Bewegung.

In einem weiteren Ausführungsbeispiel steuert das Steuerungssystem 14' des zweiten angetriebenen Transportfahrwerks 1' in einem Hundemodus, insbesondere bei Schrägfahrt das zweite angetriebene Transportfahrwerk 1' derart, dass der erste Drehwinkel α1 und der zweite Drehwinkel α2 etwa gleich groß sind, insbesondere mit einer Toleranz von etwa +/- 1,5°, und insbesondere dass die Spur des zweiten Transportfahrwerk 1' parallel zur Spur des ersten Transportfahrwerks 1 verläuft.

Fig. 8 zeigt einen Achsschenkellenkungsmoduls, also insbesondere eine Kurvenfahrt. Die Steuerungssysteme 14, 14' steuern hierbei das erste und das zweite angetriebene Transportfahrwerk 1, 1' derart, dass die Last 12 um einen Drehpunkt 5 gedreht wird, wobei die Steuerungssystems 14, 14' derart steuern, dass der erste Drehwinkel α1 des ersten angetriebenen Transportfahrwerks 1 und der zweite Drehwinkel α2 des zweiten angetriebenen Transportfahrwerks 1' so eingestellt werden, dass sich die erste Drehachse 13 des ersten Drehtellers 11 und die zweite Drehachse 13' des zweiten Drehtellers 11' jeweils um den Drehpunkt 25 drehen, insbesondere dass der erste Abstand der ersten Drehachse 13 zum Drehpunkt 25 etwa konstant ist, insbesondere dass der zweite Abstand der zweiten Drehachse 13' zum Drehpunkt 25 etwa konstant ist, und insbesondere dass der erste Abstand etwa ungleich zum zweiten Abstand ist.

In einem weiteren Ausführungsbeispiel steuert das Steuerungssystem 14' des zweiten angetriebenen Transportfahrwerks 1' in einem Achsschenkellenkungsmoduls, insbesondere bei Kurvenfahrt, das zweite angetriebene Transportfahrwerk 1' derart, dass die Last 12 um einen Drehpunkt 25 gedreht wird, wobei das Steuerungssystem 14' des ersten angetriebenen Transportfahrwerks 1 und das Steuerungssystem 14' des zweiten angetriebenen Transportfahrwerks 1' derart steuern, dass der erste Drehwinkel α1 des ersten angetriebenen Transportfahrwerks 1 und der zweite Drehwinkel α2 des zweiten angetriebenen Transportfahrwerks 1' so eingestellt werden, dass sich die erste Drehachse 13 des ersten Drehtellers 11 und die zweite Drehachse 13' des zweiten Drehtellers 11' jeweils um den Drehpunkt 25 drehen, insbesondere dass der erste Abstand der ersten Drehachse 13 zum Drehpunkt 25 etwa konstant ist, insbesondere dass der zweite Abstand der zweiten Drehachse 13' zum Drehpunkt 25 etwa konstant ist, und insbesondere dass der erste Abstand etwa ungleich zum zweiten Abstand ist. In einem weiteren Ausführungsbeispiel umfasst das Transportsystem 17 vier, sechs, acht, oder mehr als acht Transportfahrwerke 1, 1'.

Fig. 9 zeigt beispielhaft das Bediengerät 21 in Form einer Fernbedienung. Der Benutzer kann über das Bediengerät 21 die beiden angetriebenen Transportfahrwerke 1, 1' ansteuern und insbesondere der Last 12 die gewünschten Fahrmanöver, also die gewünschte Fahrtrichtung vorgeben. Die Kommunikation zwischen der Fernbedienung und des und/oder der Transportfahrwerke 1, 1' erfolgt vorteilhaft drahtlos, beispielsweise über Funk. Das Bediengerät 21 umfasst eine Eingabevorrichtung, um die Fahrmanöver und/oder Fahrmodi und/oder die Ausrichtung vor zu geben. Das Bediengerät 21 sendet bevorzugt einen Befehl zur Ausrichtung des zweiten Transportfahrwerks 1' an das zweite Transportfahrwerk 1'. Das Bediengerät 21 sendet insbesondere den Befehl zur Ausrichtung des zweiten Transportfahrwerks 1' solange an das zweite Transportfahrwerk 1' sendet, bis das zweite Transportfahrwerk 1' ausgerichtet ist.

In einem weiteren Ausführungsbeispiel kann das Bediensystem im weitesten Sinne auch als ein Computer verstanden werden, auf welchem eine App, also eine Anwendungssoftware, gespeichert ist. Über die Anwendungssoftware können ein oder mehrere der oben zur Fernbedienung beschriebenen Steuermöglichkeiten, wie beispielsweise Auswahl der Fahrmanöver und dergleichen, auswählbar sein. Unter Computer sind Personal Computer (PC) zu verstehen, aber auch mobile Computer wie beispielsweise Smartphones, Tablets, und dergleichen. Zweckmäßig umfasst der Computer ein Funkmodul, mit welchen eine drahtlose Verbindung zur Datenübertragung von und zum Transportfahrwerk 1, 1' herstellbar ist.

Bevorzugt ist das Transportsystem 17 zum Transportieren einer Last dazu eingerichtet, ein hierin beschriebenes Verfahren durchzuführen. Bevorzugt ist das angetriebene Transportfahrwerk 1, 1' für das hierin beschriebene Transportsystem 17 vorgesehen. Bevorzugt ist das angetriebene Transportfahrwerk 1, 1' für die Durchführung eines hierin beschriebenen Verfahrens vorgesehen.

### Bezugszeichenliste:

- 1: Transportfahrwerk
- 2: Rahmen
- 3: Längsträger
- 4: Längsträger
- 5: Querträger
- 6: Antriebseinheit
- 7: Antriebseinheit
- 8: Antriebsrolle
- 9: Elektromotor
- 10: Lastrolle
- 11: Drehteller
- 12: Last
- 13: Drehachse
- 14: Steuerungssystem
- 15: Kommunikationseinheit
- 16: Drehgeber
- 17: Transportsystem
- 18: Rotationsfahrwerk
- 19: Auflageteller
- 20: Lastrollen
- 21: Bediengerät
- 22: Fahrtrichtung
- 23: Geradeausfahrtrichtung
- 24: Statusanzeige
- 25: Drehpunkt

## Patentansprüche

1. Verfahren zum Transportieren einer Last (12) mit einem Transportsystem (17) umfassend ein erstes angetriebenes Transportfahrwerk (1), ein zweites angetriebenes Transportfahrwerk (1') und ein Bediengerät (21), wobei das erste angetriebene Transportfahrwerk (1) und/oder das zweite angetriebene Transportfahrwerk (1') über das Bediengerät (21) bedienbar ist, mit den folgenden Verfahrensschritten:
- Transportieren der Last (12) mit dem Transportsystem (17) in einem ersten Fahrmanöver, wobei im ersten Fahrmanöver das zweite Transportfahrwerk (1') dem ersten Transportfahrwerk (1) folgt,
- Beenden des ersten Fahrmanövers und Umschalten auf ein zweites Fahrmanöver,
**gekennzeichnet durch**:
- Vor Beginn des zweiten Fahrmanövers Ausrichtung des zweiten Transportfahrwerks (1 '), wobei sich das zweite Transportfahrwerk (1') automatisch relativ zum ersten Transportfahrwerk (1) positioniert, und wobei das zweite Transportfahrwerk (1') eine Rückmeldung an das erste Transportfahrwerk (1) und/oder an das Bediengerät (21) zur vollständigen Ausrichtung gibt, nachdem sich das zweite Transportfahrwerk (1') relativ zum ersten Transportfahrwerk (1) vollständig ausgerichtet hat, so dass das zweite Fahrmanöver begonnen werden kann,
- Transportieren der Last (12) mit dem Transportsystem (17) im zweiten Fahrmanöver, wobei im zweiten Fahrmanöver das zweite Transportfahrwerk (1') dem ersten Transportfahrwerk (1) folgt.

2. Verfahren nach Anspruch 1, **dadurch gekennzeichnet, dass** das Bediengerät (21) eine Statusanzeige (24) umfasst, und dass bei vollständiger Ausrichtung die Statusanzeige (24) aufleuchtet.

3. Verfahren nach Anspruch 1 oder 2, **dadurch gekennzeichnet, dass** das zweite Transportfahrwerk (1') eine Rückmeldung zur unvollständigen Ausrichtung gibt, nachdem sich das zweite Transportfahrwerk (1') relativ zum ersten Transportfahrwerk (1) unvollständig ausgerichtet hat und/oder während sich das zweite Transportfahrwerk (1') relativ zum ersten Transportfahrwerk (1) ausrichtet.

4. Verfahren nach einem der Ansprüche 1 bis 3, **dadurch gekennzeichnet, dass** vor dem ersten Fahrmanöver das zweite Transportfahrwerk (1') relativ zum ersten Transportfahrwerk (1), insbesondere manuell, ausgerichtet wird, dass nach der, insbesondere manuellen, Ausrichtung eine Geradeausfahrt, insbesondere mit der Last (12), durchgeführt wird, und dass sich bei nichtparalleler Fahrt der beiden Transportfahrwerke (1, 1') das zweite Transportfahrwerk (1') relativ zum ersten Transportfahrwerk (1') ausrichtet, insbesondere so lange ausrichtet, bis beide Transportfahrwerke (1, 1') parallel fahren.

5. Verfahren nach einem der Ansprüche 1 bis 4, **dadurch gekennzeichnet, dass** das erste Transportfahrwerk (1) einen Rahmen (2) und einen mit dem Rahmen (2) wirkverbundenen Drehteller (11) umfasst, dass der Drehteller (11) zur Auflage der zu transportierenden Last (12) vorgesehen ist, dass der Drehteller (11) relativ zum Rahmen (2) drehbar ist, dass das erste Transportfahrwerk (1) einen Drehgeber (16) umfasst, dass der Drehgeber (16) den Drehwinkel und/oder die Änderung des Drehwinkels des Drehtellers (11) relativ zum Rahmen (2) erfasst,
und/oder dass das zweite Transportfahrwerk (1') einen Rahmen (2') und einen mit dem Rahmen (2') wirkverbundenen Drehteller (11') umfasst, dass der Drehteller (11') zur Auflage der zu transportierenden Last (12) vorgesehen ist, dass der Drehteller (11') relativ zum Rahmen (2') drehbar ist, dass das zweite Transportfahrwerk (1') einen Drehgeber (16') umfasst, dass der Drehgeber (16') den Drehwinkel und/oder die Änderung des Drehwinkels des Drehtellers (11') relativ zum Rahmen (2') erfasst,
und dass der Drehwinkel des ersten Transportfahrwerks (1) und/oder des zweiten Transportfahrwerks (1') und/oder dass die Änderung des Drehwinkels des ersten Transportfahrwerks (1) und/oder zweiten Transportfahrwerks (1') zur Ausrichtung des zweiten Transportfahrwerks (1') verwendet wird.

6. Verfahren nach einem der Ansprüche 1 bis 5, **dadurch gekennzeichnet, dass** das erste Transportfahrwerk (1) drahtlos mit dem zweiten Transportfahrwerk (1') kommuniziert.

7. Verfahren nach einem der Ansprüche 1 bis 6, **dadurch gekennzeichnet, dass** das Bediengerät eine Fernbedienung ist.

8. Verfahren nach einem der Ansprüche 1 bis 7, **dadurch gekennzeichnet, dass** das zweite Transportfahrwerk (1') dem Bediengerät (21) mitteilt, ob sich das zweite Transportfahrwerk (1') relativ zum ersten Transportfahrwerk (1) vollständig ausgerichtet hat, und/oder ob sich das zweite Transportfahrwerk (1') relativ zum ersten Transportfahrwerk (1) unvollständig ausgerichtet hat, und/oder ob sich das zweite Transportfahrwerk (1') relativ zum ersten Transportfahrwerk (1) ausrichtet, und insbesondere dass das Bediengerät (21) die Mitteilung einem Bediener ausgibt.

9. Verfahren nach einem der Ansprüche 1 bis 8, **dadurch gekennzeichnet, dass** das Bediengerät (21) eine Bedientaste oder einen Joystick umfasst, dass das Bediengerät (21) bei Druck auf die Bedientaste oder durch eine Auslenkung des Joysticks einen Befehl zur Ausrichtung des zweiten Transportfahrwerks (1') an das zweite Transportfahrwerk (1') sendet, und insbesondere dass die Bedientaste solange gedrückt wird oder dass der Joystick solange ausgelenkt wird, bis die Ausrichtung abgeschlossen ist.

10. Verfahren nach einem der Ansprüche 1 bis 9, **dadurch gekennzeichnet, dass** das Bediengerät (21) einen Befehl zur Ausrichtung des zweiten Transportfahrwerks (1') an das zweite Transportfahrwerk (1') sendet.

11. Verfahren nach Anspruch 10, **dadurch gekennzeichnet, dass** das Bediengerät (21) den Befehl zur Ausrichtung des zweiten Transportfahrwerks (1') solange an das zweite Transportfahrwerk (1') sendet, bis das zweite Transportfahrwerk (1') ausgerichtet ist.

12. Verfahren nach einem der Ansprüche 1 bis 11, **dadurch gekennzeichnet, dass** das Transportsystem (17) ein drittes angetriebenes Transportfahrwerk (1, 1') umfasst, mit den folgenden Verfahrensschritten:
- Transportieren der Last (12) mit dem Transportsystem (17) in einem ersten Fahrmanöver, wobei im ersten Fahrmanöver das zweite Transportfahrwerk (1') und das dritte Transportfahrwerk (1, 1') dem ersten Transportfahrwerk (1) folgen,
- Beenden des ersten Fahrmanövers und Umschalten auf ein zweites Fahrmanöver,
- Ausrichtung des zweiten Transportfahrwerks (1') und des dritten Transportfahrwerks (1, 1'), wobei sich das zweite Transportfahrwerk (1') und das dritte Transportfahrwerk (1, 1') automatisch relativ zum ersten Transportfahrwerk (1) positionieren,
- Transportieren der Last (12) mit dem Transportsystem (17) im zweiten Fahrmanöver, wobei im zweiten Fahrmanöver das zweite Transportfahrwerk (1') und das dritte Transportfahrwerk (1 ,1 ') dem ersten Transportfahrwerk (1) folgen.

13. Verfahren nach einem der Ansprüche 1 bis 12, **dadurch gekennzeichnet, dass** die Transportfahrwerke (1, 1') eine gleiche Bauhöhe aufweisen.

14. Transportsystem (17) zum Transportieren einer Last (12), umfassend ein erstes angetriebenes Transportfahrwerk (1), ein zweites angetriebenes Transportfahrwerk (1') und ein Bediengerät (21), wobei das erste angetriebene Transportfahrwerk (1) und/oder das zweite angetriebene Transportfahrwerk (1') über das Bediengerät (21) bedienbar ist, welches Transportsystem (17) dazu eingerichtet ist, ein Verfahren nach einem der Ansprüche 1 bis 13 durchzuführen.

15. Angetriebenes Transportfahrwerk (1') für ein Transportsystem (17) nach Anspruch 14, welches in Funktion des zweiten angetriebenen Transportfahrwerks (1') für die Durchführung eines Verfahrens nach einem der Ansprüche 1 bis 13 vorgesehen und dazu eingerichtet ist.

## Claims

1. Method for transporting a load (12) with a transport system (17) comprising a first driven transport chassis (1), a second driven transport chassis (1') and an operating device (21), wherein the first driven transport chassis (1) and/or the second driven transport chassis (1') can be operated via the operating device (21), with the following method steps:
- transporting the load (12) with the transport system (17) in a first driving manoeuvre, wherein in the first driving manoeuvre the second transport chassis (1') follows the first transport chassis (1),
- ending the first driving manoeuvre and switching to a second driving manoeuvre,
**characterised in that**:
- before the start of the second driving manoeuvre, the second transport chassis (1') is aligned, wherein the second transport chassis (1') is automatically positioned relative to the first transport chassis (1), and wherein the second transport chassis (1') provides feedback to the first transport chassis (1) and/or to the operating device (21) for complete alignment after the second transport chassis (1') has fully aligned itself relative to the first transport chassis (1) such that the second driving manoeuvre can be started,
- the load (12) is transported with the transport system (17) in the second driving manoeuvre, wherein in the second driving manoeuvre the second transport chassis (1') follows the first transport chassis (1).

2. Method according to claim 1, **characterised in that** the operating device (21) comprises a status indicator (24), and that the status indicator (24) lights up when fully aligned.

3. Method according to claim 1 or 2, **characterised in that** the second transport chassis (1') provides feedback on the incomplete alignment after the second transport chassis (1') has incompletely aligned itself relative to the first transport chassis (1) and/or while the second transport chassis (1') is aligning itself relative to the first transport chassis (1).

4. Method according to any of claims 1 to 3, **characterised in that** before the first driving manoeuvre the second transport chassis (1') is aligned relative to the first transport chassis (1), in particular manually, that after the alignment, in particular manual alignment, a straight-ahead travel, in particular with the load (12), is carried out, and that when the two transport chassis (1, 1') are not travelling parallel, the second transport chassis (1') aligns itself relative to the first transport chassis (1'), in particular aligns itself until both transport chassis (1, 1') are travelling parallel.

5. Method according to any of claims 1 to 4, **characterised in that** the first transport chassis (1) comprises a frame (2) and a turntable (11) operatively connected to the frame (2), that the turntable (11) is provided for supporting the load (12) to be transported, that the turntable (11) is rotatable relative to the frame (2), that the first transport chassis (1) comprises a rotary encoder (16), that the rotary encoder (16) detects the angle of rotation and/or the change in the angle of rotation of the turntable (11) relative to the frame (2),
and/or that the second transport chassis (1') comprises a frame (2') and a turntable (11') operatively connected to the frame (2'), that the turntable (11') is provided for supporting the load (12) to be transported, that the turntable (11') is rotatable relative to the frame (2'), that the second transport chassis (1') comprises a rotary encoder (16'), that the rotary encoder (16') detects the angle of rotation and/or the change in the angle of rotation of the turntable (11') relative to the frame (2'),
and that the angle of rotation of the first transport chassis (1) and/or the second transport chassis (1') and/or that the change in the angle of rotation of the first transport chassis (1) and/or the second transport chassis (1') is used to align the second transport chassis (1').

6. Method according to any of claims 1 to 5, **characterised in that** the first transport chassis (1) communicates wirelessly with the second transport chassis (1').

7. Method according to any of claims 1 to 6, **characterised in that** the operating device is a remote control.

8. Method according to any of claims 1 to 7, **characterised in that** the second transport chassis (1') informs the operating device (21) whether the second transport chassis (1') has fully aligned itself relative to the first transport chassis (1), and/or whether the second transport chassis (1') has incompletely aligned itself relative to the first transport chassis (1), and/or whether the second transport chassis (1') is aligning itself relative to the first transport chassis (1), and in particular that the operating device (21) outputs the message to an operator.

9. Method according to any of claims 1 to 8, **characterised in that** the operating device (21) comprises an operating button or a joystick, that the operating device (21) sends a command for aligning the second transport chassis (1') to the second transport chassis (1') when the operating button is pressed or when the joystick is deflected, and in particular that the operating button is pressed until the alignment is complete or that the joystick is deflected until the alignment is complete.

10. Method according to any of claims 1 to 9, **characterised in that** the operating device (21) sends a command for aligning the second transport chassis (1') to the second transport chassis (1').

11. Method according to claim 10, **characterised in that** the operating device (21) sends the command for aligning the second transport chassis (1') to the second transport chassis (1') until the second transport chassis (1') is aligned.

12. Method according to any of claims 1 to 11, **characterised in that** the transport system (17) comprises a third driven transport chassis (1, 1'), with the following method steps:
- transporting the load (12) with the transport system (17) in a first driving manoeuvre, wherein in the first driving manoeuvre the second transport chassis (1') and the third transport chassis (1, 1') follow the first transport chassis (1),
- ending the first driving manoeuvre and switching to a second driving manoeuvre,
- aligning the second transport chassis (1') and the third transport chassis (1, 1'), wherein the second transport chassis (1') and the third transport chassis (1, 1') automatically position themselves relative to the first transport chassis (1),
- transporting the load (12) with the transport system (17) in the second driving manoeuvre, wherein in the second driving manoeuvre the second transport chassis (1') and the third transport chassis (1, 1') follow the first transport chassis (1).

13. Method according to any of claims 1 to 12, **characterised in that** the transport chassis (1, 1') have the same overall height.

14. Transport system (17) for transporting a load (12), comprising a first driven transport chassis (1), a second driven transport chassis (1') and an operating device (21), wherein the first driven transport chassis (1) and/or the second driven transport chassis (1') can be operated via the operating device (21), which transport system (17) is configured to carry out a method according to any of claims 1 to 13.

15. Driven transport chassis (1') for a transport system (17) according to claim 14 which, as a function of the second driven transport chassis (1'), is provided and configured for carrying out a method according to any of claims 1 to 13.

## Revendications

1. Procédé de transport d'une charge (12) avec un système de transport (17) comprenant un premier châssis de transport entraîné (1), un deuxième châssis de transport entraîné (1') et un appareil de commande (21), ledit premier châssis de transport entraîné (1) et/ou ledit deuxième châssis de transport entraîné (1') pouvant être commandé par l'appareil de commande (21), avec les étapes de procédé suivantes :
- le transport de la charge (12) avec le système de transport (17) lors d'une première manœuvre, ledit deuxième châssis de transport (1') suivant le premier châssis de transport (1) lors de la première manœuvre,
- l'arrêt de la première manœuvre et le passage à une seconde manœuvre,
**caractérisé par** :
- avant le début de la seconde manœuvre, l'alignement du deuxième châssis de transport (1'), ledit deuxième châssis de transport (1') se positionnant automatiquement par rapport au premier châssis de transport (1), et ledit deuxième châssis de transport (1') donnant un retour d'information au premier châssis de transport (1) et/ou à l'appareil de commande (21) pour un alignement complet, après que le deuxième châssis de transport (1') se soit complètement aligné par rapport au premier châssis de transport (1), de sorte que la seconde manœuvre puisse être commencée,
- le transport de la charge (12) avec le système de transport (17) lors de la seconde manœuvre, ledit deuxième châssis de transport (1') suivant le premier châssis de transport (1) lors de la seconde manœuvre.

2. Procédé selon la revendication 1, **caractérisé en ce que** l'appareil de commande (21) comprend un voyant d'état (24) et **en ce que** le voyant d'état (24) s'allume en cas d'alignement complet.

3. Procédé selon la revendication 1 ou 2, **caractérisé en ce que** le deuxième châssis de transport (1') donne un retour d'information sur l'alignement incomplet, après que le deuxième châssis de transport (1') se soit aligné de manière incomplète par rapport au premier châssis de transport (1) et/ou pendant que le deuxième châssis de transport (1') s'aligne par rapport au premier châssis de transport (1).

4. Procédé selon l'une quelconque des revendications 1 à 3, **caractérisé en ce qu'**avant la première manœuvre, le deuxième châssis de transport (1') est aligné par rapport au premier châssis de transport (1), en particulier manuellement, **en ce qu'**après l'alignement, en particulier manuel, un déplacement en ligne droite, en particulier avec la charge (12), est effectué, et **en ce que** lors du déplacement non parallèle des deux châssis de transport (1, 1'), le deuxième châssis de transport (1') est aligné par rapport au premier châssis de transport (1'), en particulier jusqu'à ce que les deux châssis de transport (1, 1') se déplacent parallèlement.

5. Procédé selon l'une quelconque des revendications 1 à 4, **caractérisé en ce que** le premier châssis de transport (1) comprend un cadre (2) et un plateau tournant (11) relié fonctionnellement au cadre (2), **en ce que** le plateau tournant (11) est prévu pour le support de la charge (12) à transporter, **en ce que** le plateau tournant (11) peut tourner par rapport au cadre (2), **en ce que** le premier châssis de transport (1) comprend un capteur de rotation (16), **en ce que** le capteur de rotation (16) détecte l'angle de rotation et/ou la modification de l'angle de rotation du plateau tournant (11) par rapport au cadre (2),
et/ou que le deuxième châssis de transport (1') comprend un cadre (2') et un plateau tournant (11') relié fonctionnellement au cadre (2'), que le plateau tournant (11') est prévu pour le support de la charge à transporter (12), que le plateau tournant (11') est rotatif par rapport au cadre (2'), que le deuxième châssis de transport (1') comprend un capteur de rotation (16'), que le capteur de rotation (16') détecte l'angle de rotation et/ou la modification de l'angle de rotation du plateau tournant (11') par rapport au cadre (2'),
et que l'angle de rotation du premier châssis de transport (1) et/ou du deuxième châssis de transport (1') et/ou que la modification de l'angle de rotation du premier châssis de transport (1) et/ou du deuxième châssis de transport (1') est utilisé pour l'alignement du deuxième châssis de transport (1').

6. Procédé selon l'une quelconque des revendications 1 à 5, **caractérisé en ce que** le premier châssis de transport (1) communique sans fil avec le deuxième châssis de transport (1').

7. Procédé selon l'une quelconque des revendications 1 à 6, **caractérisé en ce que** l'appareil de commande est une télécommande.

8. Procédé selon l'une quelconque des revendications 1 à 7, **caractérisé en ce que** le deuxième châssis de transport (1') indique à l'appareil de commande (21) si le deuxième châssis de transport (1') s'est complètement aligné par rapport au premier châssis de transport (1), et/ou si le deuxième châssis de transport (1') s'est aligné de manière incomplète par rapport au premier châssis de transport (1), et/ou si le deuxième châssis de transport (1') s'aligne par rapport au premier châssis de transport (1), et en particulier **en ce que** l'appareil de commande (21) transmet le message à un opérateur.

9. Procédé selon l'une quelconque des revendications 1 à 8, **caractérisé en ce que** l'appareil de commande (21) comprend une touche de commande ou un joystick, **en ce que** l'appareil de commande (21) envoie une commande pour l'alignement du deuxième châssis de transport (1') au deuxième châssis de transport (1') lors d'une pression sur la touche de commande ou par un déplacement du joystick, et en particulier **en ce que** la touche de commande est enfoncée ou **en ce que** le joystick est déplacé jusqu'à ce que l'alignement soit terminé.

10. Procédé selon l'une quelconque des revendications 1 à 9, **caractérisé en ce que** l'appareil de commande (21) envoie une commande pour l'alignement du deuxième châssis de transport (1') au deuxième châssis de transport (1').

11. Procédé selon la revendication 10, **caractérisé en ce que** l'appareil de commande (21) envoie la commande pour l'alignement du deuxième châssis de transport (1') au deuxième châssis de transport (1') jusqu'à ce que le deuxième châssis de transport (1') soit aligné.

12. Procédé selon l'une quelconque des revendications 1 à 11, **caractérisé en ce que** le système de transport (17) comprend un troisième châssis de transport entraîné (1, 1'), avec les étapes de procédé suivantes :
- le transport de la charge (12) avec le système de transport (17) lors d'une première manœuvre, ledit deuxième châssis de transport (1') et ledit troisième châssis de transport (1, 1') suivant le premier châssis de transport (1) lors de la première manœuvre,
- l'arrêt de la première manœuvre et le passage à une seconde manœuvre,
- l'alignement du deuxième châssis de transport (1') et du troisième châssis de transport (1, 1'), ledit deuxième châssis de transport (1') et ledit troisième châssis de transport (1, 1') se positionnant automatiquement par rapport au premier châssis de transport (1),
- le transport de la charge (12) avec le système de transport (17) lors de la seconde manœuvre, ledit deuxième châssis de transport (1') et ledit troisième châssis de transport (1, 1') suivant le premier châssis de transport (1) lors de la seconde manœuvre.

13. Procédé selon l'une quelconque des revendications 1 à 12, **caractérisé en ce que** les châssis de transport (1, 1') présentent une même hauteur de construction.

14. Système de transport (17) permettant de transporter une charge (12), comprenant un premier châssis de transport entraîné (1), un deuxième châssis de transport entraîné (1') et un appareil de commande (21), ledit premier châssis de transport entraîné (1) et/ou ledit deuxième châssis de transport entraîné (1') pouvant être commandé par l'appareil de commande (21), lequel système de transport (17) est conçu pour exécuter un procédé selon l'une quelconque des revendications 1 à 13.

15. Châssis de transport entraîné (1') destiné à un système de transport (17) selon la revendication 14, qui est prévu et agencé en fonction du deuxième châssis de transport entraîné (1') pour l'exécution d'un procédé selon l'une quelconque des revendications 1 à 13.
